# NEUE EUROPÄISCHE PATENTSCHRIFT

(11) **EP 4 081 686 B2**
(45) Veröffentlichungstag und Bekanntmachung des Hinweises auf die Entscheidung über den Einspruch: **23.09.2026**
(45) Hinweis auf die Patenterteilung: 07.06.2023
(21) Anmeldenummer: 21843701.0
(22) Anmeldetag: 21.12.2021
(51) Int. Cl.: E04B 1/26, F16B 5/00, F16B 12/22

(54) **WAND-, DECKEN- ODER DACHELEMENTVERBINDUNG**
WALL, CEILING OR ROOF ELEMENT CONNECTION
RACCORDEMENT D'ÉLÉMENTS DE MUR, DE PLAFOND OU DE TOITURE

(30) Priorität: 12.01.2021 DE 202021100095 U
(43) Veröffentlichungstag der Anmeldung: 02.11.2022
(73) Patentinhaber: Buhl, Stefan, 87538 Obermaiselstein (DE)
(72) Erfinder: Buhl, Stefan, 87538 Obermaiselstein (DE)
(74) Vertreter: Dilg, Haeusler, Schindelmann Patentanwaltsgesellschaft mbH
(86) Internationale Anmeldenummer: PCT/EP2021/086985
(87) Internationale Veröffentlichungsnummer: WO 2022/152523

(56) Entgegenhaltungen:
- WO-A1-2020/051606
- AT-A4- 505 626
- US-A1- 2014 294 498
- US-A1- 2015 354 612

## Beschreibung

Die Erfindung betrifft eine Wand-, Decken- oder Dachelementverbindung zur Verbindung stab-, balken- oder plattenförmiger Bauelemente.

Zur Verbindung von Wand-, Decken- oder Dachelementen werden im Holzbau vielfach spezielle Metallverbinder oder klassische Holzverbindungen mit z.B. Finger- oder Schwalbenschwanzverzinkungen ohne metallische Verbindungselemente eingesetzt. Bei den üblichen Schwalbenschwanzverbindungen wird in der Regel an dem einen Bauteil ein Zapfen mit einer speziell geformten Außenkontur angefräst oder ausgeschnitten. An dem zweiten Bauteil wird eine dazugehörige Nut mit einer zu der Außenkontur des Zapfens korrespondierenden Innenkontur hergestellt. Die seitlichen Außenflächen des Zapfens und die dazu korrespondierenden inneren Seitenflächen der Nut sind in der Regel abgeschrägt, so dass der Zapfen und die Nut im Querschnitt die Form eines Schwalbenschwanzes aufweisen. Dadurch kann eine derartige Verbindung nicht nur Querkräfte, sondern auch Zugkräfte übertragen. Allerdings ist die Herstellung einer derartigen Verbindung mit einem entsprechenden hohen Fertigungsaufwand verbunden. Außerdem müsste bei der Verbindung großflächiger Bauelemente relativ viel Material zur Herstellung der Zapfen entfernt werden, damit der Zapfen übrigbleibt. Auch die Metallverbinder sind in der Regel aufwändig in der Herstellung und erfordern eine genaue Vormontage. Außerdem ist bei der Wandmontage das Einfahren mit solchen Metallverbindern relativ schwer, da der Spielraum sehr gering ist.

Verbindungssysteme umfassend einen an einem ersten Bauteil angeordneten Zapfen und eine an einem zweiten Bauteil angeordnete Tasche oder Nut sind weiter auch aus dem Bereich der Möbelstücke bekannt, wie beispielsweise aus US 2014/0294498 A1, WO 2020/051606 A1, US 2015/0354612 A1 und aus AT 505 626 A4.

US 2015/0354612 A1 zeigt in Figur 5B die Möglichkeit, einen männlichen Stecker an einer Paneloberfläche zu montieren. Auf der Paneloberfläche wird nur ein weibliches Steckverbinderprofil gebildet, und ein doppelseitiger männlicher Stecker wird in diesem weiblichen Steckerprofil montiert. Dieser Ansatz kann für Platten mit einer dünnen Furnierplatte geeignet sein, die durch einen Standardbefestigungsstoff oder durch lokale Belastungen auf einen solchen Standardbefestigungsstoff gebrochen werden könnte, wenn diese Platte an andere Paneele oder Bauteile montiert wird. Das weibliche Steckverbinderprofil verteilt diese Lasten auf eine größere Fläche.

Aufgabe der Erfindung ist es, eine Wand-, Decken- oder Dachelementverbindung der eingangs genannten Art zu schaffen, die eine einfache und kostengünstige Verbindung auch großflächiger Bauelemente ermöglicht.

Diese Aufgabe wird durch eine Wand-, Decken- oder Dachelementverbindung mit den Merkmalen des Anspruchs 1 gelöst. Zweckmäßige Weiterbildungen und vorteilhafte Ausführungsformen der Erfindung sind Gegenstand der Unteransprüche.

Die erfindungsgemäße Wand-, Decken- oder Dachelementverbindung umfasst einen an einem ersten Holzbauteil angeordneten Zapfen mit einer sich in Richtung des zweiten Bauelements erweiternden Außenkontur und eine an einem zweiten Holzbauteil vorgesehene Tasche oder Nut, die einen Einführungsbereich zum Einführung des Zapfens und einen Haltebereich mit einer an die Außenkontur des Zapfens angepassten, sich nach innen erweiternden Innenkontur zur Halterung des Zapfens aufweist. Der als separates Bauteil ausgebildete Zapfen ist über eine als Schraub- oder Stiftverbindung ausgeführte lösbare Verbindung an dem ersten Bauelement befestigt. Die zu dem Zapfen gehörende Tasche oder Nut ist unmittelbar in dem zweiten Holzbauteil angeordnet. Sie kann z.B. direkt in das zweite Holzbauteil eingefräst sein. Über die lösbare Verbindung können die Zapfen z.B. einfach und schnell an beliebigen Stellen montiert werden. Es sind keine aufwändigen Fertigungs- oder Montageschritte erforderlich. So können z.B. auch an den Stirn- oder Seitenflächen großer Wandbauteile relativ einfach entsprechende Zapfen an den gewünschten Stellen befestigt werden. Dadurch kann die Montage großformatiger Bauelemente, wie z.B. aus Holz gefertigter Wand-, Decken- oder Dachelemente erheblich vereinfacht werden. Gegenüber bekannten Metallverbindern bietet die erfindungsgemäße Wand-, Decken- oder Dachelementverbindung außerdem eine verbesserte Bewegungsfreiheit. Beim Ansetzen der Verbindung können die Bauteile noch einfacher ausgerichtet und justiert werden, wodurch die Montage erheblich erleichtert wird. Sowohl der Zapfen als auch die entsprechende Tasche oder Nut können einfach und kostengünstig gefertigt werden und ermöglichen eine wirtschaftliche Verbindung mit einer erheblichen Zeitersparnis bei der Montage.

Die lösbare Verbindung ist dabei, wie oben angeführt, als Schrauben- oder Stiftverbindung mit einer oder mehreren Schrauben, Stiften oder anderen ähnlichen Befestigungselementen ausgeführt. Über die Schrauben oder entsprechende Befestigungselemente sind die Zapfen einfach und schnell an beliebigen Stellen montierbar und können bei Bedarf auch versetzt oder nachjustiert werden.

Gemäß der erfindungsgemäßen Ausgestaltung weist der Zapfen einen sich von einer dem ersten Holzbauteil zugewandten inneren Anschlussfläche zu einer dem zweiten Holzbauteil zugewandten äußeren Stirnfläche hin erweiternden Querschnitt und der Haltebereich der Tasche oder Nut einen sich von einer stirnseitigen Außenfläche des zweiten Holzbauteils nach innen erweiternden Querschnitt auf. Durch eine derartige Kontur können auch Zugkräfte mit hoher Stabilität übertragen werden.

Um eine sichere und positionsgenaue Verbindung zwischen dem Zapfen und dem ersten Holzbauteil zu erreichen, ist an der dem ersten Holzbauteil zugewandten inneren Anschlussfläche des Zapfens eine z.B. in Art einer Passfeder ausgeführte Erhebung zum formschlüssigen Eingriff in eine entsprechende Vertiefung am ersten Holzbauteil vorgesehen. Die Wand-, Decken- oder Dachelementverbindung kann als Schwalbenschwanzverbindung mit geneigten äußeren Seitenflächen an dem Zapfen und entsprechend geneigten inneren Seitenflächen in der Tasche oder Nut ausgebildet sein. In einer besonders stabilen und tragfähigen Ausführung kann der Zapfen in Form eines sich in Einschubrichtung verjüngenden Keils ausgebildet sein. Der Zapfen kann aber auch die Form eines Kegelstumpfs oder die Form eines blockförmigen Einschubteils mit gleichmäßigem Querschnitt aufweisen.

In einer weiteren möglichen Ausführung kann die Wand-, Decken- oder Dachelementverbindung auch als T-Verbindung mit einer T-Nut und einem zugehörigen Zapfen mit T-förmigen Querschnitt ausgeführt sein.

Die Seitenflächen der Tasche oder Nut und auch die Außenflächen des Zapfens verlaufen in Einschubrichtung des Zapfens zweckmäßigerweise keilförmig aufeinander zu. Der Zapfen und die Tasche oder Nut können aber auch einen gleichbleibenden Querschnitt aufweisen.

Der Zapfen kann zweckmäßigerweise aus Holz, vorzugsweise aus Furnierschichtholz oder Hartholz hergestellt werden, er kann aber auch aus Kunststoff oder Metall bestehen.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: ein erstes Ausführungsbeispiel einer Wand-, Decken- oder Dachelementverbindung in einer Unteransicht, geschnittenen Seitenansicht und Draufsicht;
- **Figur 2**: ein zweites, nicht erfindungsgemäßes, Ausführungsbeispiel einer Wand-, Decken- oder Dachelementverbindung in einer Unteransicht, geschnittenen Seitenansicht und Draufsicht und
- **Figur 3**: ein drittes Ausführungsbeispiel einer Wand-, Decken- oder Dachelementverbindung in verschiedenen Ansichten.

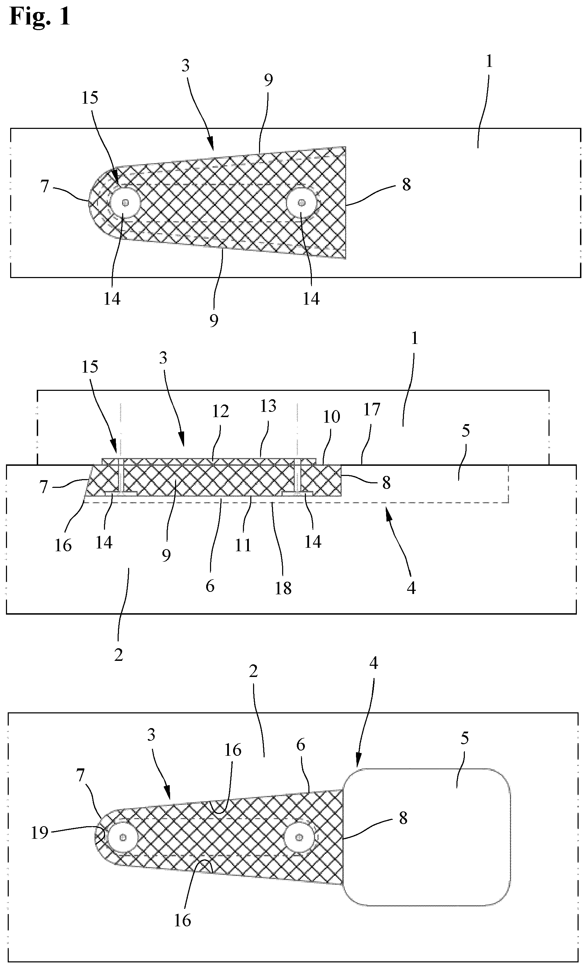

In den Figuren 1 bis 3 sind verschiedene Ausführungsbeispiele einer Wand-, Decken- oder Dachelementverbindung zur Verbindung von z.B. balken- oder plattenförmigen Holzbauteilen 1 und 2 in verschiedenen Ansichten gezeigt. Die Wand-, Decken- oder Dachelementverbindung umfasst einen am ersten Holzbauteil 1 angeordneten Zapfen 3 mit einer sich in Richtung des zweiten Bauelements 2 erweiternden Außenkontur und eine am zweiten Holzbauteil 2 vorgesehene Tasche oder Nut 4, die einen Einführungsbereich 5 zum Einführung des Zapfens 3 und einen Haltebereich 6 mit einer an die Außenkontur des Zapfens 3 angepassten, sich nach innen erweiternden Innenkontur zur Halterung des Zapfens 3 aufweist.

Bei der in Figur 1 in verschiedenen Ansichten gezeigten Ausführung weist der Zapfen 3 eine sich in Einschubrichtung verjüngende Keilform mit einem trapezförmigen Querschnitt auf. Der Zapfen 3 enthält eine in Einschubrichtung gesehen schlankere vordere Endfläche 7 und eine breitere hintere Endfläche 8, wobei die vordere Endfläche 7 abgerundet ist. Der Zapfen 3 weist außerdem geneigte äußere Seitenflächen 9 auf. Die Seitenflächen 9 sind so geneigt, dass sich der Zapfen 3 im Querschnitt von einer dem Bauteil 1 zugewandten inneren Anschlussfläche 10 zu einer dem Bauteil 2 zugewandten äußeren Stirnfläche 11 hin trapezförmig erweitert. Der Zapfen 3 weist an seiner dem Bauteil 1 zugewandten inneren Anschlussfläche 10 eine in Art einer Passfeder ausgebildete Erhöhung 12 zum formschlüssigen Eingriff in eine entsprechende Vertiefung 13 im Bauteil 1 auf. Durch eine hier als Schraubverbindung mit mehreren Schrauben 14 ausgeführte lösbare Verbindung 15 ist der Zapfen 3 an dem Bauteil 1 befestigt.

Wie insbesondere aus der unteren Ansicht der Figur 1 hervorgeht, weist die zu dem Zapfen 3 gehörende Tasche oder Nut 4 in dem Bauteil 2 einen verbreiterten Einführbereich 5 und eine schlankeren Haltebereich 6 auf. Der Haltebereich 6 ist derart ausgeführt, dass die inneren Seitenflächen 16 der Tasche oder Nut 4 in diesem Bereich so geneigt sind, dass sich die Tasche oder Nut 4 im Haltebereich 6 im Querschnitt von einer stirnseitigen Außenfläche 17 des zweiten Bauteils 2 zu einer inneren Bodenfläche 18 hin trapezförmig erweitert. Auch die Tasche oder Nut 4 weist im Haltebereich 4 einen sich entsprechend der Form des Zapfens 3 in Einschubrichtung des Zapfens 3 keilförmig verjüngenden Verlauf mit einer sich vom Einführbereich 5 bis zu einem abgerundeten inneren Ende 19 hin verringernden Breite auf. Der Haltebereich 6 der Nut 4 kann z.B. mit einem Schwalbenschwanzfräser hergestellt werden.

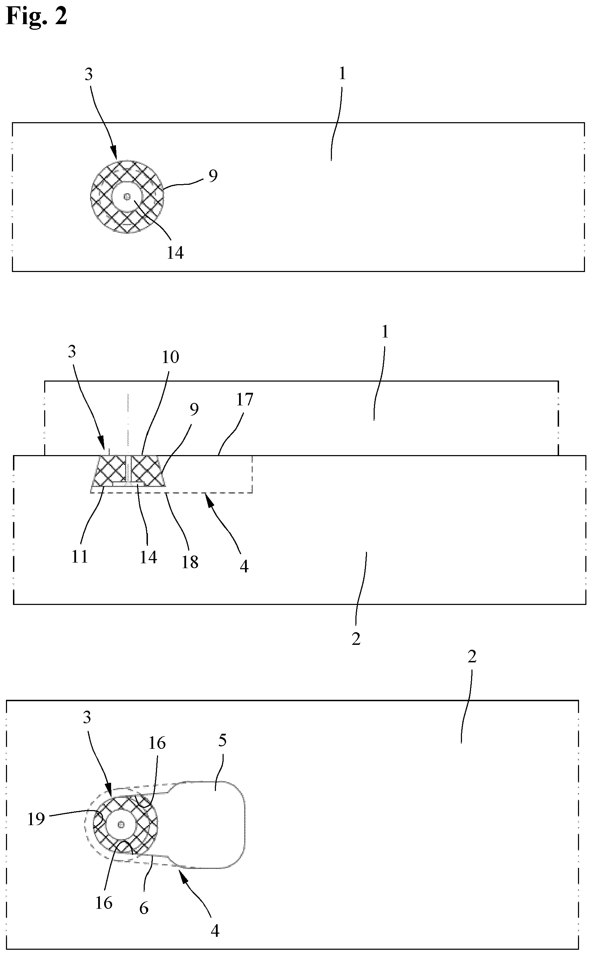

Bei einer in Figur 2 gezeigten weiteren, nicht erfindungsgemäßen, Ausführung einer Wand-, Decken- oder Dachelementverbindung ist der Zapfen 3 in Form eines sich in Richtung des zweiten Holzbauteils 2 erweiternden Kegelstumpfs mit einer hier konisch ausgebildeten äußeren Seitenfläche 9 ausgeführt. Der als Kegelstumpf ausgebildete Zapfen 3 weist eine dem Bauteil 1 zugewandte innere Anschlussfläche 10 mit einem geringeren Durchmesser und eine dem Bauteil 2 zugewandte äußere Stirnfläche 11 mit einem größeren Durchmesser auf. Der als Kegelstumpf ausgebildete Zapfen 3 ist über eine einzelne Schraube 14 an dem ersten Holzbauteil 1 befestigt.

Wie aus der unteren Ansicht der Figur 2 hervorgeht, enthält auch hier die zu dem Zapfen 3 gehörende Tasche oder Nut 4 in dem Bauteil 2 einen verbreiterten Einführbereich 5 und einen schlankeren Haltebereich 6. Der verbreiterte Einführbereich 5 weist eine größere Breite als der größte Durchmesser des Zapfens 3 auf. Der Haltebereich 6 ist derart ausgeführt, dass die inneren Seitenflächen 16 der Nut 4 in diesem Bereich so geneigt sind, dass sich die Tasche oder Nut 4 im Haltebereich 6 im Querschnitt von einer stirnseitigen Außenfläche 17 des zweiten Holzbauteils 2 zu einer inneren Bodenfläche 18 hin trapezförmig erweitert. Auch hier weist die Tasche oder Nut 4 im Haltebereich 6 einen sich in Einschubrichtung des Zapfens 3 keilförmig verjüngenden Verlauf mit einer sich vom Einführbereich 5 bis zu einem abgerundeten inneren Ende 19 hin verringernden Breite auf. Der Haltebereich 6 der Tasche oder Nut 4 kann auch hier z. B. mit einem geeigneten Schwalbenschwanzfräser hergestellt werden.

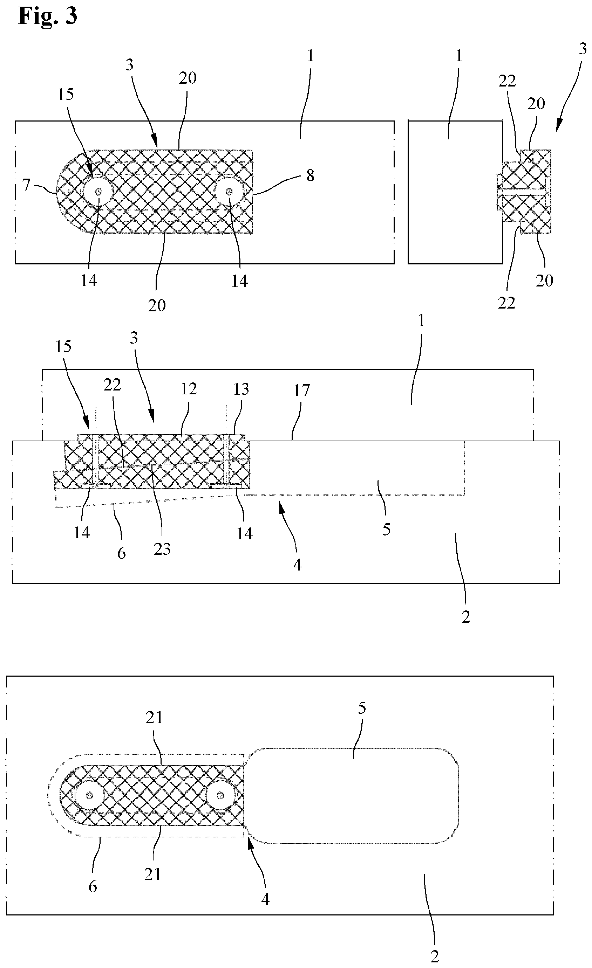

In Figur 3 ist ein weiteres Ausführungsbeispiel einer erfindungsgemäßen Wand-, Decken- oder Dachelementverbindung gezeigt. Im Unterschied zu den vorherigen Ausführungen laufen die äußeren Seitenflächen 9 des über eine lösbare Verbindung 15 an dem ersten Holzbauteil 1 befestigten Zapfens 3 und auch die entsprechenden inneren Seitenflächen 16 der Nut 4 in Einschubrichtung des Zapfens 3 nicht keilförmig aufeinander zu, sondern der Zapfen 3 und auch die entsprechende Tasche oder Nut 4 weisen nahezu über der gesamten Länge eine gleichbleibende Breite auf. Auch bei dieser Ausführung weist der Zapfen 3 jedoch einen sich von einer dem ersten Bauteil 1 zugewandten inneren Anschlussfläche 10 zu einer dem zweiten Bauteil zugewandten äußeren Stirnfläche 11 hin erweiternden Querschnitt und entsprechend die Tasche oder Nut 4 einen sich von einer stirnseitigen Außenfläche 17 des zweiten Holzbauteils 2 nach innen erweiternden Querschnitt auf.

Die in Figur 3 gezeigte Wand-, Decken- oder Dachelementverbindung ist auch nicht als Schwalbenschwanzverbindung mit nach innen geneigten Seitenflächen, sondern als T-Verbindung mit einem in Form einer T-Nutensteins ausgebildeten Zapfen 3 und einer zugehörigen Tasche oder Nut 4 mit einem Haltebereich 6 in Form einer T-Nut ausgeführt. Der Zapfen 3 weist abgestufte äußere Seitenflächen 20 und die Tasche oder Nut 4 entsprechend abgestufte innere Seitenflächen 21 an dem Haltebereich 6 auf. An der Stufe der äußeren Seitenflächen 20 des Zapfens 3 sind in Einschubrichtung des Zapfens 3 gesehenen nach unten geneigte Anlageflächen 22 zur Anlage an entsprechend geneigten Auflageflächen 23 an der Stufe der inneren Seitenflächen 21 vorgesehen. Dadurch wird beim Einschieben des Zapfens 3 in den Haltebereich 6 eine zur Einschubrichtung rechtwinklige Einzugskraft erreicht. Die geneigten Auflageflächen 23 in der Tasche oder Nut 4 sind an der Oberseite des schräg nach unten verlaufenden Haltebereichs 6 der Nut 4 angeordnet. Der Haltebereich 6 kann durch einen gegenüber der stirnseitigen Außenfläche 17 des zweiten Holzbauteils 2 geneigten T-Nutenfräser hergestellt werden.

Der Zapfen 3 kann vorzugsweise aus Furnierschichtholz hergestellt werden, er kann aber auch aus Hartholz, Kunststoff oder Metall bestehen.

### Bezugszeichenliste

- 1: Erstes Holzbauteil
- 2: Zweites Holzbauteil
- 3: Zapfen
- 4: Nut
- 5: Einführungsbereich
- 6: Haltebereich
- 7: Vordere Endfläche
- 8: Hintere Endfläche
- 9: Geneigte äußere Seitenfläche
- 10: Anschlussfläche
- 11: Stirnfläche
- 12: Erhöhung
- 13: Vertiefung
- 14: Schraube
- 15: Lösbare Verbindung
- 16: Geneigte innere Seitenfläche
- 17: Außenfläche
- 18: Bodenfläche
- 19: Inneres Ende
- 20: Abgestufte äußere Seitenfläche
- 21: Abgestufte innere Seitenfläche
- 22: Anlagefläche
- 23: Auflagefläche

## Patentansprüche

1. Wand-, Decken- oder Dachelementverbindung mit einem ersten und einem zweiten stab-, balken- oder plattenförmigen Holzbauteil (1, 2), und einem an dem ersten Holzbauteil (1) angeordneten Zapfen (3), über den das erste Holzbauteil (1) an dem zweiten Holzbauteil (2) verbindbar ist, wobei der Zapfen (3) einen sich von einer dem ersten Holzbauteil (1) zugewandten inneren Anschlussfläche (10) zu einer dem zweiten Holzbauteil (2) zugewandten äußeren Stirnfläche (11) hin erweiternden Querschnitt aufweist, und eine im zweiten Holzbauteil (2) unmittelbar angeordnete Tasche oder Nut (4) mit einem Einführungsbereich (5) zur Einführung des Zapfens (3) und einem Haltebereich (6) mit einem an die Außenkontur des Zapfens (3) angepassten, sich von einer stirnseitigen Außenfläche (17) des zweiten Bauteils (2) nach innen erweiternden Querschnitt zur Halterung des Zapfens (3) umfasst, wobei der Zapfen (3) über eine lösbare Schraub- oder Stiftverbindung (15) an dem ersten Holzbauteil (1) befestigt ist, wobei an der dem ersten Holzbauteil (1) zugewandten inneren Anschlussfläche (10) des Zapfens (3) eine Erhebung (12) zum formschlüssigen Eingriff in eine entsprechende Vertiefung (13) am ersten Bauteil (1) vorgesehen ist, wobei die Erhebung (12) einen Umriss vollständig innerhalb eines Umrisses der inneren Anschlussfläche (10) des Zapfens (3) hat.

2. Wand-, Decken- oder Dachelementverbindung nach Anspruch 1, wobei die Tasche oder Nut (4) in das zweite Holzbauteil (2) eingefräst ist.

3. Wand-, Decken- oder Dachelementverbindung nach einem der Ansprüche 1 oder 2, wobei der Zapfen (3) geneigte äußere Seitenflächen (9) und die dazugehörige Tasche oder Nut (4) entsprechend geneigte innere Seitenflächen (16) enthält.

4. Wand-, Decken- oder Dachelementverbindung nach einem der Ansprüche 1 bis 3, wobei der Zapfen (3) in Form eines sich in Einschubrichtung verjüngenden Keils ausgebildet ist.

5. Wand-, Decken- oder Dachelementverbindung nach einem der Ansprüche 1 bis 3, wobei der Zapfen (3) in Form eines Kegelstumpfs ausgebildet ist.

6. Wand-, Decken- oder Dachelementverbindung nach einem der Ansprüche 1 bis 2, wobei der Zapfen (3) einen T-förmigen Querschnitt aufweist und die zugehörige Tasche oder Nut (4) in Form einer T-Nut ausgebildet ist.

7. Wand-, Decken- oder Dachelementverbindung nach Anspruch 6, wobei der Zapfen (3) abgestufte äußere Seitenflächen (20) und die dazugehörige Tasche oder Nut (4) entsprechend abgestufte innere Seitenflächen (21) enthält.

8. Wand-, Decken- oder Dachelementverbindung nach Anspruch 7, wobei der Zapfen (3) in Form eines T-Nutensteins ausgebildete Zapfen (3) geneigte Anlageflächen (22) zur Anlage an entsprechend geneigten Auflageflächen (23) im Inneren der Tasche oder Nut (4) aufweist.

9. Wand-, Decken- oder Dachelementverbindung nach einem der Ansprüche 1 bis 8, wobei der Zapfen (3) aus Holz, Kunststoff oder Metall besteht.

## Claims

1. Wall, ceiling or roof element connection with a first and a second bar-, beam- or plate-shaped wooden component (1, 2) and a pin (3) arranged on the first wooden component (1), by means of which the first wooden component (1) can be connected to the second wooden component (2), wherein the pin (3) has a cross-section widening from an inner connection surface (10) facing the first wooden component (1) to an outer front surface (11) facing the second wooden component (2), and a recess or notch (4) arranged directly in the second wooden component (2) having an insertion section (5) for inserting the pin (3) and a holding section (6) with a cross-section adapted to the outer contour of the pin (3) for holding the pin (3), the cross-section is inwardly widening from a front-face exterior surface (17) of the second component (2), wherein the pin (3) being fastened to the first wooden component (1) by means of a releasable screw or pin connection (15), wherein an elevation (12) for positive engagement in a corresponding depression (13) on the first component (1) is provided on the inner connection surface (10) of the pin (3) facing the first wooden component (1), wherein the elevation (12) has a contour completely within a contour of the inner connection surface (10) of the pin (3).

2. Wall, ceiling or roof element connection according to claim 1, wherein the recess or notch (4) is milled into the second wooden component (2).

3. Wall, ceiling or roof element connection according to any one of claims 1 or 2, wherein the pin (3) includes inclined outer side surfaces (9) and the associated recess or notch (4) includes correspondingly inclined inner side surfaces (16).

4. Wall, ceiling or roof element connection according to one of claims 1 to 3, wherein the pin (3) is designed in the form of a wedge tapering in the insertion direction.

5. Wall, ceiling or roof element connection according to one of claims 1 to 3, wherein the pin (3) is in the form of a truncated cone.

6. Wall, ceiling or roof element connection according to one of the claims 1 to 2, wherein the pin (3) has a T-shaped cross section and the associated recess or notch (4) is in the form of a T-notch.

7. Wall, ceiling or roof element connection according to claim 6, wherein the pin (3) includes stepped outer side surfaces (20) and the associated recess or notch (4) includes correspondingly stepped inner side surfaces (21).

8. Wall, ceiling or roof element connection according to claim 7, wherein the pin (3), which is designed in the form of a T-nut, has inclined bearing surfaces (22) for bearing against correspondingly inclined bearing surfaces (23) in the inside of the pocket or notch (4).

9. Wall, ceiling or roof element connection according to one of claims 1 to 8, wherein the pin (3) is made of wood, plastic or metal.

## Revendications

1. Liaison d'élément de mur, de plafond ou de toiture avec un premier et un second composant de bois en forme de tige, barre ou plaque (1, 2) et un tenon (3) agencé niveau du premier composant de bois (1), par le biais duquel le premier composant de bois (1) peut être relié au niveau du second composant de bois (2), dans laquelle le tenon (3) présente une section transversale s'élargissant d'une surface de raccordement (10) intérieure tournée vers le premier composant de bois (1) vers une surface frontale (11) extérieure tournée vers le second composant de bois (2), et comporte une poche ou rainure (4) agencée directement dans le second composant de bois (2) avec une zone d'introduction (5) pour l'introduction du tenon (3) et une zone de retenue (6) avec une section transversale s'élargissant depuis une surface extérieure (17) côté frontal du second composant (2) vers l'intérieur, adaptée au contour extérieur du tenon (3), dans laquelle le tenon (3) est fixé par le biais d'une liaison par vis ou goupille (15) détachable au premier composant de bois (1),
dans laquelle
une élévation (12) est prévue pour la prise par complémentarité de formes dans une cavité (13) correspondante au niveau du premier composant (1) au niveau de la surface de raccordement (10) intérieure tournée vers le premier composant de bois (1), l'élévation (12) présentant un contour entièrement situé à l'intérieur du contour de la surface de raccordement interne (10) du tenon (3).

2. Liaison d'élément de mur, de plafond ou de toiture selon la revendication 1,
dans laquelle la poche ou rainure (4) est fraisée dans le second composant de bois (2).

3. Liaison d'élément de mur, de plafond ou de toiture selon l'une quelconque des revendications 1 ou 2, dans laquelle le tenon (3) contient des surfaces latérales (9) extérieures inclinées et la poche ou rainure (4) afférente contient des surfaces latérales (16) intérieures inclinées en conséquence.

4. Liaison d'élément de mur, de plafond ou de toiture selon l'une quelconque des revendications 1 à 3, dans laquelle le tenon (3) est réalisé sous la forme d'un coin se rétrécissant dans le sens d'insertion.

5. Liaison d'élément de mur, de plafond ou de toiture selon l'une quelconque des revendications 1 à 3, dans laquelle le tenon (3) est réalisé sous la forme d'un cône tronqué.

6. Liaison d'élément de mur, de plafond ou de toiture selon l'une quelconque des revendications 1 à 2, dans laquelle le tenon (3) présente une section transversale en forme de T et la poche ou rainure (4) afférente est réalisée sous la forme d'une rainure en T.

7. Liaison d'élément de mur, de plafond ou de toiture selon la revendication 6, dans laquelle le tenon (3) contient des surfaces latérales (20) extérieures étagées et la poche ou rainure (4) afférente contient des surfaces latérales (21) intérieures étagées en conséquence.

8. Liaison d'élément de mur, de plafond ou de toiture selon la revendication 7, dans laquelle le tenon (3) réalisé sous la forme d'un coulisseau en T présente des surfaces d'appui (22) inclinées pour l'appui contre des surfaces de pose (23) inclinées en conséquence à l'intérieur de la poche ou rainure (4).

9. Liaison d'élément de mur, de plafond ou de toiture selon l'une des revendications 1 à 8, dans laquelle le tenon (3) se compose de bois, de matière plastique ou de métal.
